# EUROPEAN PATENT APPLICATION

(11) **EP 1 976 267 A2**
(43) Date of publication of application: **01.10.2008**
(21) Application number: 08001196.8
(22) Date of filing: 23.01.2008
(51) Int. Cl.: H04N 5/14, H04N 13/00

(54) **Image processing apparatus and image processing method**

(30) Priority: 29.03.2007 JP 2007086336
(71) Applicant: Hitachi, Ltd., Chiyoda-ku Tokyo 100-8280 (JP)
(72) Inventor: Izuhara, Muneto, Tokyo 100-8220 (JP); Yokota, Soichiro, Tokyo 100-8220 (JP); Monji, Tatsuhiko, Tokyo 100-8220 (JP); Furusawa, Isao, Tokyo 100-8220 (JP)
(74) Representative: Beetz & Partner

(57) **Abstract**

The present invention provides an image processing technology for detecting the motion vector of an image pickup target with increase accuracy. Disclosed is an image processing apparatus that includes: an image processing buffer (105) for storing images that are input from a plurality of image pickup devices (101, 102); a distance image calculation image processing section (109) for acquiring a disparity image between a first image, which is picked up by an image pickup device and stored in the image processing buffer, and a second image, which is simultaneously picked up by another image pickup device that corresponds to the image pickup device used to pick up the first image; and a motion vector calculation image processing section (110) for acquiring a motion vector image between the first image and a third image, which is picked up with a time lag by the image pickup device used to pick up the first image.

## Description

### BACKGROUND OF THE INVENTION

### 1. Field of the Invention

The present invention relates to an image processing apparatus and image processing method for detecting a motion vector.

### 2. Description of the Related Art

Techniques for processing images picked up by a camera and detecting a motion vector of a picked-up target object, for instance, by calculating an optical flow are now developed for use in various fields.

Achieving high realtimeness in motion vector detection based on such image processing as described above is important for safety and convenience enhancement purposes in the associated fields. However, an optical flow calculation process involves complicated calculations and takes an enormous amount of time. Therefore, the optical flow calculation may impair realtimeness depending on the capacity of an employed processing apparatus.

Known techniques disclosed, for instance, by JP-A-205-214914, which use a disparity image to recognize a target object with the use of a stereo camera, determines the location of the target object in accordance with the result of the recognition, and performs motion vector calculations only on the vicinity of the target object.

### SUMMARY OF THE INVENTION

Such conventional techniques narrow the scope of motion vector calculation in accordance with image recognition results. Therefore, it was difficult to perform motion vector calculations on a target with adequate accuracy due to the added possibility of false recognition and recognition failure during motion vector calculations and the possibility of false recognition and recognition failure during image recognition.

An object of the present invention is to provide an image processing technology for detecting the motion vector of an image pickup target with increased accuracy.

To achieve the above object, the present invention stores images input from a plurality of image pickup devices, acquires an disparity image between two images picked up by different image pickup devices, respectively, but at the same time, acquires a motion vector image between two stored images picked up by same image pickup device with a time lag, and recognizes a picked-up target object within the images in accordance with the disparity image and the motion vector image.

The features described above make it possible to detect the motion vector of an image pickup target with increased accuracy.

### BRIEF DESCRIPTION OF THE DRAWINGS

Fig. 1 is a block diagram illustrating the configuration of an image processing apparatus according to one embodiment.
Fig. 2 is a flowchart illustrating a process that the circuitry shown in Fig. 1 performs to calculate a motion vector image.
Fig. 3 is a flowchart illustrating a process that the circuitry shown in Fig. 1 performs to calculate a motion vector image.
Fig. 4 is a flowchart illustrating a process that the circuitry shown in Fig. 1 performs to calculate a motion vector image.
Fig. 5 shows an actual phenomenon.
Fig. 6 shows a motion vector image that corresponds to Fig. 5.
Fig. 7 is a data flow diagram illustrating a motion vector calculation process according the embodiment shown in Fig. 1.
Fig. 8 is a block diagram illustrating the configuration of the image processing apparatus according to another embodiment.
Fig. 9 is a block diagram illustrating the configuration of the image processing apparatus according to another embodiment.
Fig. 10 is a block diagram illustrating the configuration of the image processing apparatus according to another embodiment.
Fig. 11 is a block diagram illustrating the configuration of the image processing apparatus according to another embodiment.
Fig. 12 is a block diagram illustrating the configuration of the image processing apparatus according to another embodiment.
Fig. 13 is a block diagram illustrating the configuration of the image processing apparatus according to still another embodiment.

### DETAILED DESCRIPTION OF THE PREFERRED EMBODIMENTS

Embodiments of the present invention will now be described with reference to the accompanying drawings. The following description is based on the use of a stereo camera mounted in an automobile. However, the present invention can be applied not only to automobiles but also to everything that needs to detect obstacles.

In the past, the scope of motion vector calculation was narrowed in accordance with image recognition results. Therefore, it was difficult to perform motion vector calculations on a target with adequate accuracy due to false recognition and recognition failure during motion vector calculations in addition to false recognition and recognition failure during image recognition. Further, the range of search represents a maximum detectable speed. Therefore, when the search range is narrowed, it is practically impossible to detect obstacles having a speed that exceeds the search range. Furthermore, the motion vector of a target is calculated after image recognition, and it is the motion vector calculated in the last process that can be used for the image recognition. Therefore, if, for instance, the target object has a relative speed of 180 km/h in a situation where image processing is performed at intervals of 100 msec, the target turns out to be 5 meters closer than expected.

Under the above circumstances, the stereo camera according to an embodiment of the present invention has a motion vector calculation function, and calculates, without requiring image recognition results, the motion vector related to an image acquired in the current processing cycle simultaneously with the calculation of a disparity image or with a slight delay within the same processing cycle. In this manner, the present invention provides a method for calculating the motion vector of a recognition target object with a minimum of false recognition and recognition failure.

The term "raw image" refers to an image with pixels representing brightness values acquired from an image pickup device.

The term "disparity image" refers to an image with pixels representing positional differences involved in images acquired from a plurality of image pickup devices. The distance between the camera and an imaged target object is calculated in accordance with the positional differences and the relative positional relationship between the image pickup devices.

The term "motion vector image" refers to an image with pixels representing positional differences involved in images picked up at different points of time. The motion vector, that is, the motion speed and movement direction of a target object, is calculated in accordance with the positional differences and image pickup time differences.

If it is assumed that a positional difference involved in a plurality of images is a disparity, the disparity of the same target object within a plurality of simultaneously-picked-up images represents a distance whereas the disparity of the same target object within a plurality of images picked up at different points of time represents a motion vector. For the sake of convenience, however, an image indicating a distance is hereinafter referred to as a disparity image, and an image indicating a motion vector is hereinafter referred to as a motion vector image.

### First Embodiment

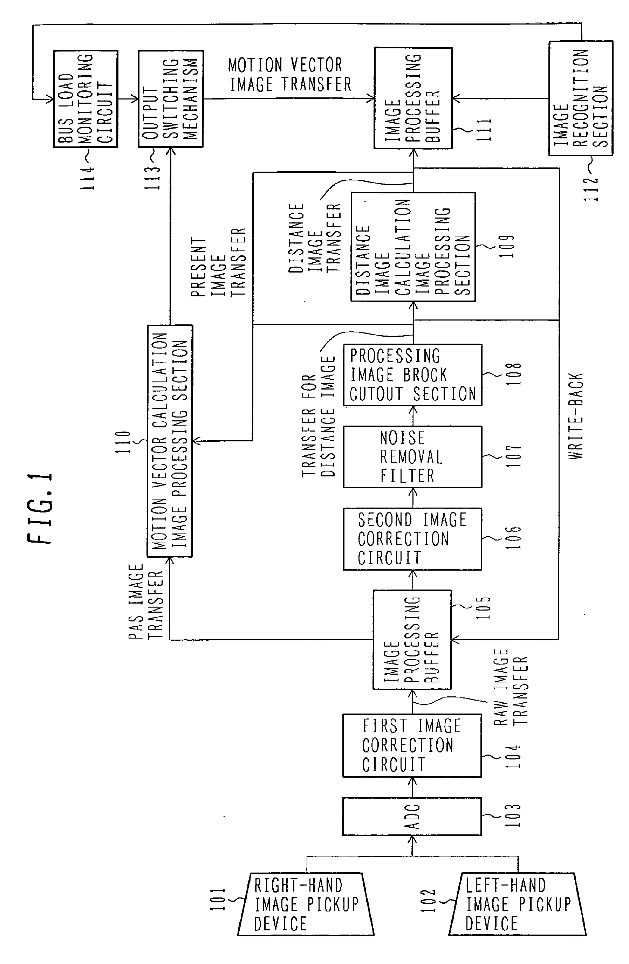

Fig. 1 is a block diagram illustrating the configuration of an image processing apparatus according to a first embodiment.

Computing a disparity image and a motion vector image from a plurality of images requires a judgment as to the degree of image agreement between a reference image and a search target image. For this judgment, a SAD (Sum of Absolute Difference) is used. The SAM is a method of extracting an image in units of blocks having a number of pixels, adding up absolute values of brightness value differences between pixels in a reference image block and search target image block, and calculating a block having the smallest resulting value as a matching block. The disparity image can be obtained by entering right- and left-hand images into a SAD circuit; the motion vector image can be obtained by entering present and past images into the SAD circuit.

Analog signals output from right- and left-hand image pickup devices 101 and 102 are converted to a digital signal by an A/D converter (ADC) 103. The output signal generated from the A/D converter 103 is processed by a first image correction circuit 104 so as to absorb, for instance, brightness value differences between right- and left-hand images. An image output from the first image correction circuit 104 is stored in an image processing buffer 105, which includes, for instance, a RAM. Hardware-induced delay occurs due, for instance, to exposure time during the time interval between the instant at which an imaging operation starts and the instant at which the image processing buffer 105 stores the image. Therefore, the buffer is used for timing synchronization.

Subsequently, a second image correction circuit 106 corrects the image distorted by a camera lens. Then, a noise removal filter 107 removes image noise. Further, a processing image block cutout section 108 cuts the image into processing units.

The cut-out image blocks are used for three different purposes. First, the image blocks are transferred to a distance image calculation image processing section 109, which is a SAD circuit, in order to obtain a disparity image from the right- and left-hand images. Secondly, the image blocks are transferred to a motion vector calculation image processing section 110, which is also a SAD circuit, in order to collate a present image with a past image and obtain a motion vector image. Thirdly, the image blocks are written back in the image processing buffer 105 for temporary image storage in order to calculate the next motion vector image.

The image to be input or written back here is the one processed by the second image correction circuit 106 and noise removal filter 107. However, it is not necessary to incorporate both of these processing sections. These processing sections, including the processing image block cutout section 108, may be selectively incorporated depending on the quality required of the processed image. However, the processes common to the images input into the distance image calculation image processing section 109, motion vector calculation image processing section 110, and image processing buffer 105 should be collectively performed before the input of the images from a viewpoint of processing time. Especially, sharing the processing image block cutout section 108 allows each image processing section to share the processing target range, thereby contributing to an increase in the speed of image processing. Further, a plurality of units of the distance image calculation image processing section 109 and motion vector calculation image processing section 110 may alternatively be employed to perform disparity image calculations and motion vector calculations separately; the same circuit can also be used to perform both of the calculations.

The disparity image and motion vector image, which are output from the distance image calculation image processing section 109 and motion vector calculation image processing section 110, are stored in an image processing buffer 111, which includes, for instance, a RAM.

It is preferred that an output switching mechanism 113 be additionally incorporated to exercise control for specifying whether or not to permit the output of a motion vector image depending, for instance, on bus loads and processing loads. The output switching mechanism 113 provides load reduction and enhanced system safety because it can cut an input signal from a motion vector image when the bus and processing loads are high or temporarily halt an operation of the motion vector calculation image processing section 110. A bus load monitoring circuit 114 monitors and controls the output switching mechanism 113 and notifies an image recognition section 112 of whether an output is generated from the output switching mechanism 13. Alternatively, the image recognition section 112 may exercise control to specify whether or not to generate the output.

The image recognition section 112 uses a disparity image and motion vector image to perform image recognition. A raw image may be input as needed to perform the image processing.

Here, the circuitry and filter may be formed by hardware circuits. However, software may alternatively be used to exercise their processing functions. The aforementioned processing sections, buffers, circuits, etc. need not always be positioned within a single housing. They may exist within different housings and use communication links to exchange their signals. Alternatively, the apparatus may be an all-in-one unit that incorporates the buffers, circuits, and all the processing sections including the image pickup devices.

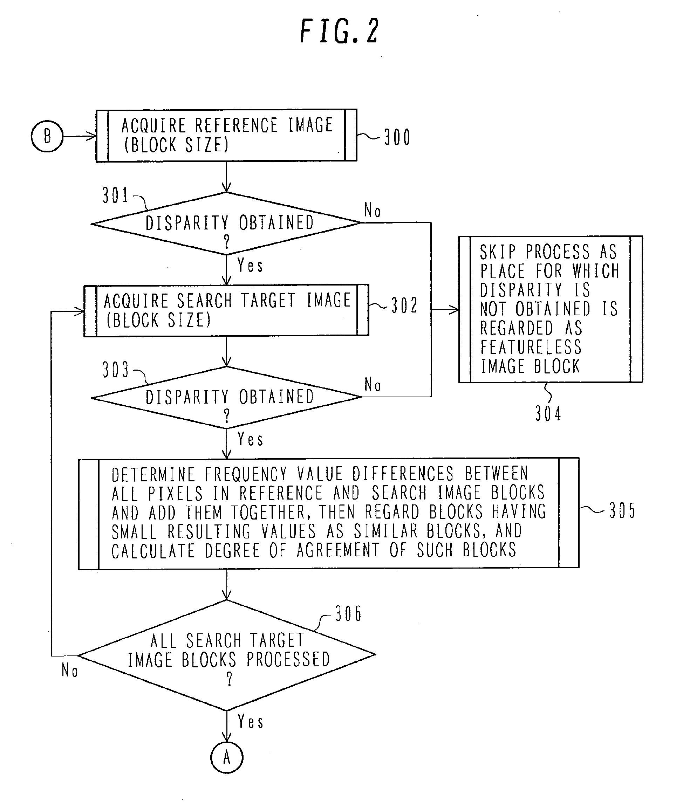

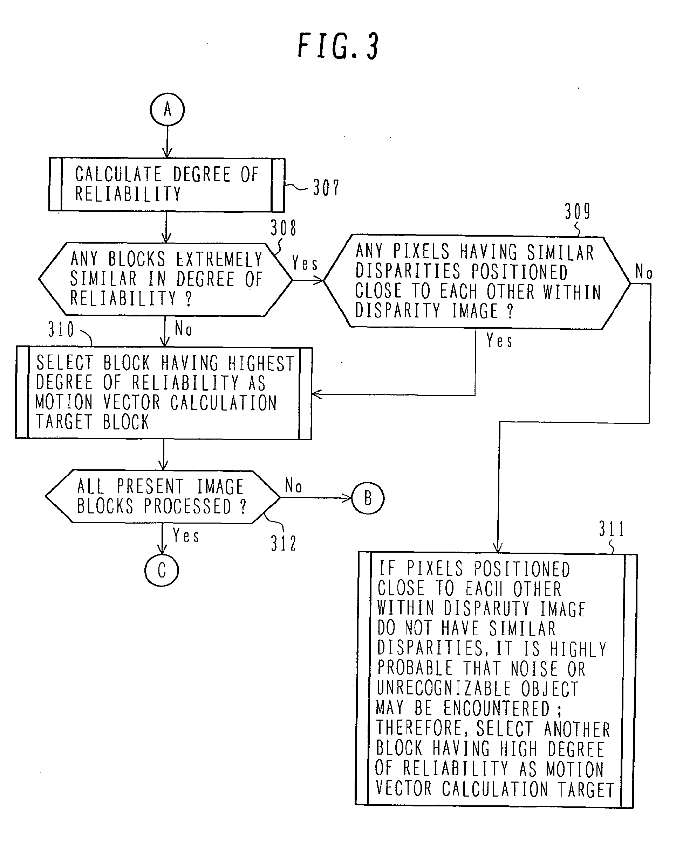

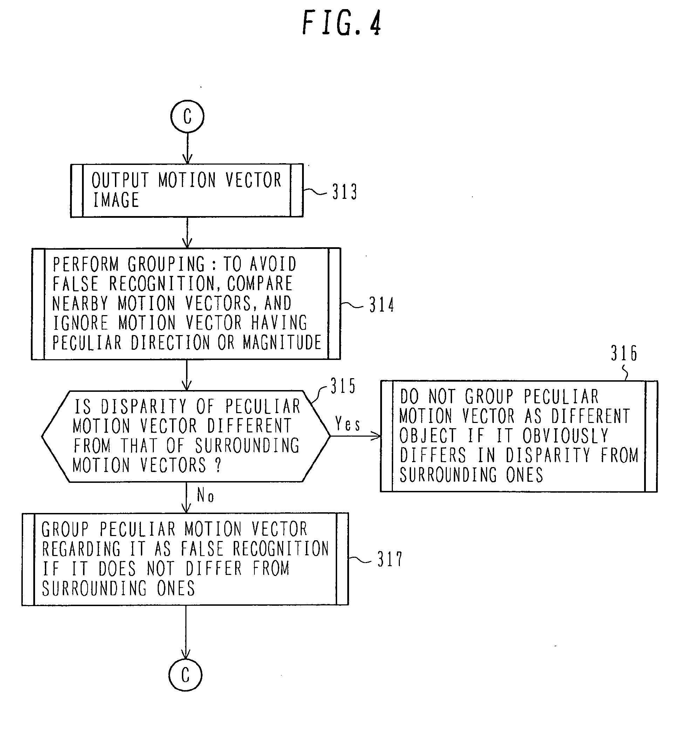

Figs. 2 to 4 are flowcharts illustrating processes that the circuitry shown in Fig. 1 performs to calculate a motion vector image.

Here, a present raw image 318, a past raw image 319, and a disparity image 320, which are cut to a reference size by the processing image block cutout section 108, are acquired. Since these images are cut to the same block size, there is no need to repeat the image cutting process. Thus, the processing can be completed at a high speed without having to perform a memory fetch or other similar processes. Further, burst transmission can be performed to increase the processing speed.

Step 300 is performed to acquire a present raw image 318, which is cut to a reference size by the processing image block cutout section 108.

In step 301, the present image block, which is acquired in step 300, is checked to judge whether a disparity is obtained in the same block of the disparity image, that is, judge whether a disparity not smaller than a predetermined value exists. If the disparity is not obtained in the same block of the disparity image as the present image block, the block has no image characteristics or few image characteristics. Therefore, even if the motion vector is calculated, it has a low reliability. Under the above circumstances, the speed and reliability of motion vector calculation can be enhanced when the process is skipped as indicated in step 304.

In step 302, a past raw image is acquired. The acquired past raw image is a search image. A block having a high degree of agreement (having a low SAD) with a reference image block is searched in the search image. The degrees of agreement between the reference block and all blocks in search image are calculated, as indicated in step 305. Although either the present image or the past image may be used as a reference image, the present embodiment handles the present image as the reference image. Here, a non-reference image is a search target image. In the present embodiment in which the present image serves as the reference, the past image is the search target image. Next, as indicated in step 303, a block for which the disparity image is not obtained skips the process in the same manner as indicated in step 301. As described above, collation with the disparity image reduces the possibility of false recognition and improves recognition performance.

Next, step 306 is performed to judge whether the degrees of agreement are calculated in all search image blocks. If calculations are not performed on all the blocks, the flow returns to step 302 and performs the same process on the next block.

If the judgment result obtained in step 306 indicates that the degree of agreement is calculated for all blocks, motion vector calculations are performed on all the blocks. In step 307, the degree of reliability is calculated. The term "degree of reliability" indicates the degree of possibility of a search image block being a motion vector of the reference image block. It can be determined, for instance, by comparing the degrees of agreement. Step 308 is performed to judge whether there are a plurality of blocks very close to each other in the degree of reliability. If there are a plurality of such blocks, step 309 is performed to judge whether data having a similar disparity exists near a target block within the disparity image. If there is a pixel having a similar disparity, the degree of reliability of a target block within the search image is increased. If, on the other hand, no similar disparity data exists nearby, it is highly probable that noise or an extremely small, unrecognizable obstacle may exist as indicated in step 311. Therefore, the degree of reliability to which the target block within the search image is a motion vector of the reference image block is decreased. This reduces the possibility of false recognition.

In step 310, a search image block having the highest degree of reliability is selected as a motion vector calculation target block of the reference image blocks.

Next, step 312 is performed to judge whether all the present image blocks have been processed. If all the present image blocks have not been processed, the flow returns to step 300 and performs the same process on the next block.

Step 313 is performed to output a calculated motion vector image. The aforementioned output switching mechanism 113 may be configured to determine whether the output should be generated in step 313.

In step 314, grouping is performed to select an actual recognition target motion vector from the motion vector image. Grouping is performed to reduce the possibility of false recognition and determine the recognition target motion vector by identifying similar motion vectors positioned close to each other and ignoring motion vectors that obviously differ from the surrounding ones.

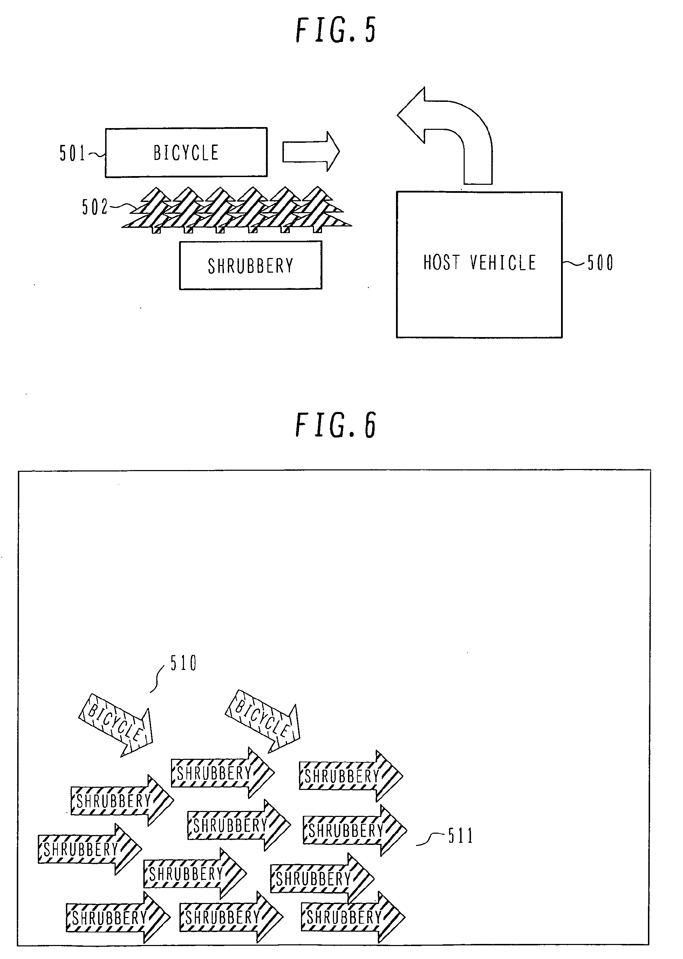

Figs. 5 and 6 show the relationship between an actual phenomenon and a motion vector image.

It is assumed that a bicycle 501, which is hidden behind left-hand shrubbery 502, is moving toward a host vehicle 500 that is about to turn left at an intersection as shown in Fig. 5. In this situation, motion vector images are as shown in Fig. 6. As the host vehicle 500 turns left, the motion vectors 511 of the shrubbery are directed to the right within the motion vector image. As the bicycle 501 moves toward the host vehicle 500, the motion vectors 510 of the bicycle 501 are directed to a slightly lower direction than the right direction as shown in the figure. When these motion vectors are subjected to grouping, the motion vectors 510 of the bicycle 501 might be erroneously regarded as the motion vectors 511 of the shrubbery 502 so that a motion vector calculation system may fail to recognize the bicycle 501. However, the present embodiment can easily collate the motion vector image with the disparity image and avoid a recognition failure. More specifically, when a target block has a peculiar motion vector, which differs from surrounding motion vectors in magnitude or direction, as indicated in step 315, the present embodiment makes comparisons with the disparity data as indicated in step 316, refrains from grouping such a peculiar motion vector assuming that it is likely to represent a different object, and avoids a recognition failure by examining the distance between the host vehicle 500 and the bicycle 501 and the distance between the host vehicle 500 and the shrubbery 502. If, as indicated in step 317, the difference between the surrounding blocks and disparity data is small, it is regarded as a false recognition, and grouping is performed in relation to the surrounding motion vector data with a view to reducing the possibility of false recognition.

The processes described above may be performed by the motion vector calculation image processing section 110 or by the image recognition section 112. Performing the above processes make it possible to generate a motion vector image at a high speed with a minimum of false recognition and recognition failure.

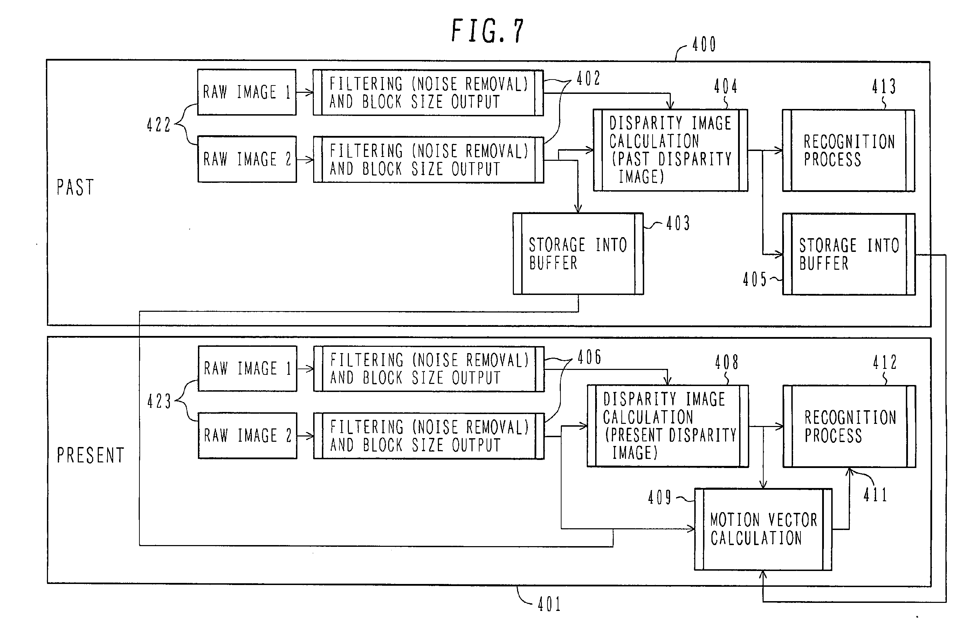

Fig. 7 is a data flow diagram illustrating a motion vector calculation process according to the embodiment shown in Fig. 1.

The upper half of Fig. 7 relates to past processing units for motion vector calculation, whereas the lower half relates to present processing units for motion vector calculation. For the sake of convenience, images acquired from past processing units are referred to as past images (past raw images and past disparity image) whereas images acquired from present processing units are referred to as present images (present raw images and present disparity image). Since the past images cannot be used for a present process unless they are buffered, they will not be used for the present process without being buffered. The upper half 400 of Fig. 7 shows a data flow of the past images, whereas the lower half 401 shows a data flow of the present images.

First of all, step 402 is followed to perform noise removal and block size cutout operations for past raw images 422, which a plurality of image pickup sections acquired from past processing units. Next, step 403 is followed to sequentially buffer the cut-out images and prepare for the next motion vector calculation. Since the cut-out images are used, there is no need to repeat the cutout operation. Consequently, image data can be acquired at a higher speed than in a case where the cutout operation is repeated.

In step 404, past disparity images are generated from the right- and left-hand past raw images for disparity image calculation purposes. In step 405, the past disparity images are sequentially buffered to prepare for the next motion vector calculation. Since these disparity images are of the same block size as the cut-out images, the disparity images and motion vector images are equal within an image. Therefore, the disparity images can be rapidly collated with the motion vector images. Next, a recognition process is performed on the past images in step 413 to conclude the image processes for the past processing units.

Next, a present process is initiated. First of all, step 406 is followed to perform noise removal and block size cutout operations for present raw images 423, which a plurality of image pickup sections acquired from present processing units. The cut-out data is then forwarded to a motion vector calculation circuit. Next, step 408 is performed to generate present disparity images for the present images. In this instance, the blocks for which the present disparity images are obtained are sequentially moved so as to transfer present disparity data to the vector calculation circuit.

In step 409, a motion vector is calculated while the past raw image and present raw image are used as the search target image and reference image, respectively, a past disparity image is referenced for the past raw image, and a present disparity image for the present raw image. Referencing the disparity images makes it possible to calculate a highly reliable motion vector at a high speed.

When a motion vector image is to be transferred, system safety may be enhanced by switching, for instance, to refrain from generating a motion vector image output while the bus load is high.

Before a recognition process 412, a recognition target motion vector is determined by grouping the motion vectors while collating them with the disparity images.

When the above operation is performed, motion vector calculations can be performed with a minimum of false recognition and recognition failure while maintaining realtimeness for generating the motion vectors from the present raw image before performing a recognition process on the present raw image and present disparity image.

Since motion vector calculations are performed by using the disparity images instead of image recognition results as described above, it is possible to provide motion vector images, which are not affected by false image recognition or by image recognition failure, before performing an image recognition process based on the disparity images and raw images obtained this time.

Further, it is not necessary to perform the same process for the purpose of entering images obtained after the image block cutout and noise reduction filtering into the motion vector calculation circuit and disparity image calculation circuit.

Furthermore, since the cut-out image data are sequentially stored, burst transmission can be performed. This makes it possible to considerably reduce the time required for a memory fetch and perform a past image transfer process at a high speed.

Moreover, when motion vector calculations are to be performed, a degree-of-image-agreement judgment circuit, which is representative of the image processing devices described above, can determine whether similar disparity data exists around a judgment target on a display image, enhance the accuracy of the degree-of-agreement judgment, and reduce the possibility of false recognition.

In addition, when consistency with the disparity images is rendered easily achievable with the same processing units employed for the motion vector images and disparity images, it is easy to reduce the possibility of recognition failure by checking the disparity images for collation purposes at the time of motion vector image grouping and preventing a hidden object seemingly overlapped by another object from being erroneously grouped as a motion vector of that hiding object.

Operational validity of the functions of the present embodiment can be verified by analyzing the access to an image buffer and distance information from a distance information/movement information extraction mechanism. The image buffer and distance information buffer are written once and read once for each processing unit when the distance information is extracted from raw images. However, a feature for extracting movement information from raw images and distance information after extracting the distance information from the raw images lies in the increase of the frequency of access to the image buffer to two writes and two reads for each processing unit. Analyzing such access makes it possible to verify that the functions of the present embodiment work normally.

### Second Embodiment

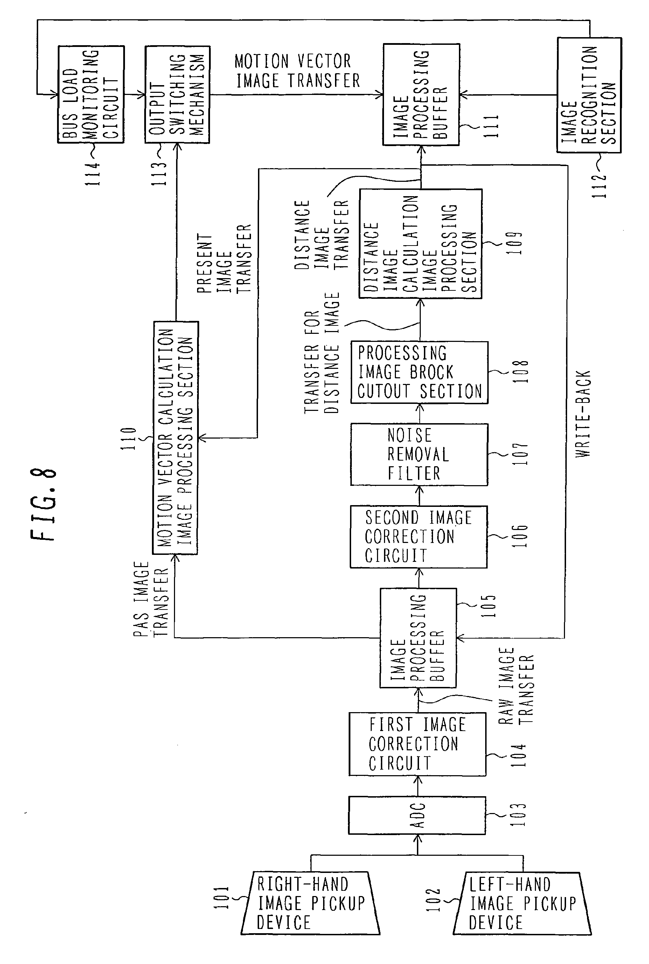

Fig. 8 is a block diagram illustrating the configuration of an image processing apparatus according to a second embodiment. The second embodiment is the same as the first embodiment except as otherwise described below.

The circuitry shown in Fig. 8 is obtained when the circuit for entering raw images into the degree-of-image-agreement judgment circuit for motion vector calculation and the circuit for writing back a past raw image are removed from the circuitry shown in Fig. 1. The second embodiment differs from the first embodiment in that only the past and present disparity images enter the system as inputs. Further, since the degree of block agreement cannot be calculated from the brightness information about raw images, the second embodiment calculates the degree of agreement in accordance with disparity data arrangement in a disparity image and disparity data values. More specifically, the second embodiment determines the degree of agreement from block disparity only while the first embodiment determines the degree of agreement from brightness value differences between block pixels. Further, surrounding blocks are regarded as a larger block so as to view the arrangement of disparity data and provide enhanced reliability. Although the first embodiment performs calculations on an individual pixel basis, the present embodiment performs calculations on an individual block basis. Therefore, the motion vector calculation process according to the present embodiment can perform calculations at an extremely high speed although it is inferior to the motion vector calculation process according to the first embodiment in terms of the degree of detail. The present embodiment also differs from the first embodiment in that the former does not perform a past raw image storage process or transfer raw images to the motion vector calculation circuit. It means that transfer loads on the system according to the present embodiment are considerably reduced. Consequently, the present embodiment is configured to provide a faster system than the first embodiment.

### Third Embodiment

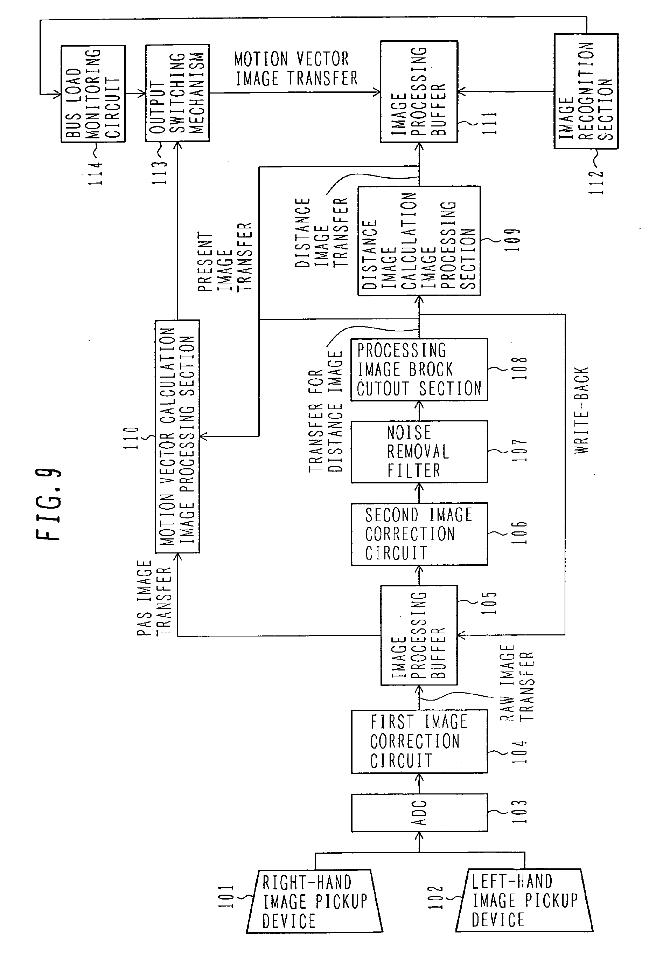

Fig. 9 is a block diagram illustrating the configuration of an image processing apparatus according to a third embodiment. The third embodiment is the same as the first embodiment except as otherwise described below.

The circuitry shown in Fig. 9 is obtained when the circuit for writing back a disparity image for subsequent motion vector calculations is removed from the circuitry shown in Fig. 1. The third embodiment calculates extremely reliable motion vectors because it uses raw images for motion vector calculation purposes. Further, the third embodiment generates highly reliable movement vector information at a high speed because it uses the information about a present disparity image. The third embodiment involves an increased amount of calculation because it does not skip the process based on the presence of disparity data as indicated in step 303 of the first embodiment. However, the third embodiment does not perform the process for buffering and transferring a past disparity image, which is indicated in step 405 of the first embodiment. This reduces data transfer loads on the third embodiment. Therefore, the third embodiment provides a system that is effective in a situation where data transfer loads are higher than motion vector calculation processing loads. The third embodiment can perform motion vector calculations with a higher precision because it calculates motion vectors on the basis of raw images. Further, the third embodiment uses present disparity images so as to provide enhanced reliability and minimize the time required for the motion vector calculation process.

### Fourth Embodiment

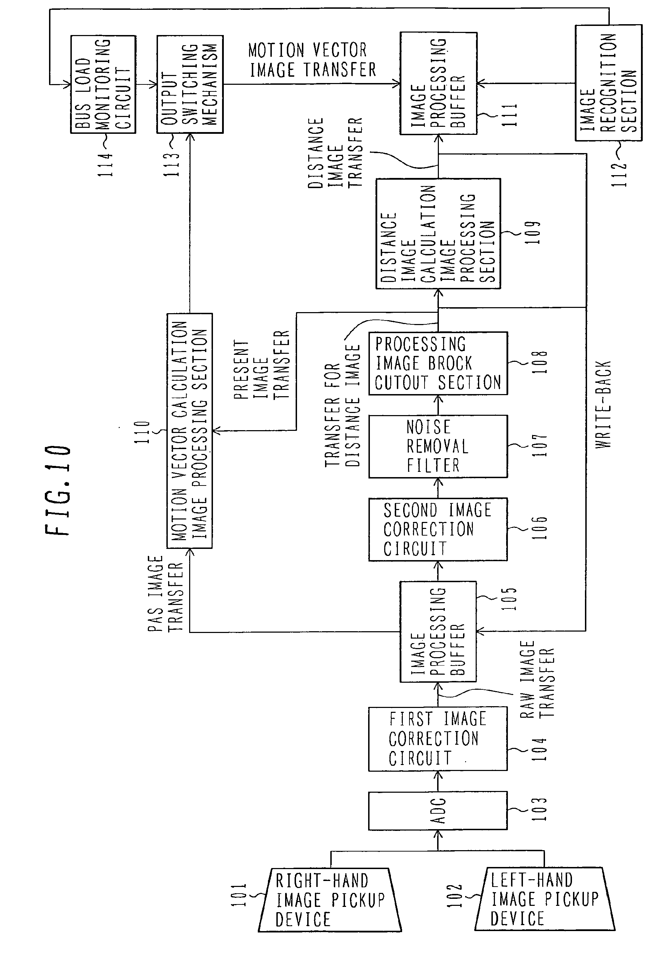

Fig. 10 is a block diagram illustrating the configuration of an image processing apparatus according to a fourth embodiment. The fourth embodiment is the same as the first embodiment except as otherwise described below.

The circuitry shown in Fig. 10 is obtained when the input of a present disparity image to the motion vector calculation circuit is removed from the circuitry shown in Fig. 1. The fourth embodiment involves a larger amount of calculation than the first embodiment because the fourth embodiment does not skip the process based on a present disparity image, which is indicated in step 301. However, since the present disparity image is not used, the fourth embodiment can perform motion vector calculations independently of a present disparity image generation process. Further, as the fourth embodiment uses raw images to perform motion vector calculations, it maintains reliability through the use of a past disparity image and performs processing at a high speed while generating motion vectors with a higher precision. Therefore, the system according to the fourth embodiment can calculate motion vectors simultaneously with or prior to disparity images with a higher precision and at a higher speed than the first embodiment.

### Fifth Embodiment

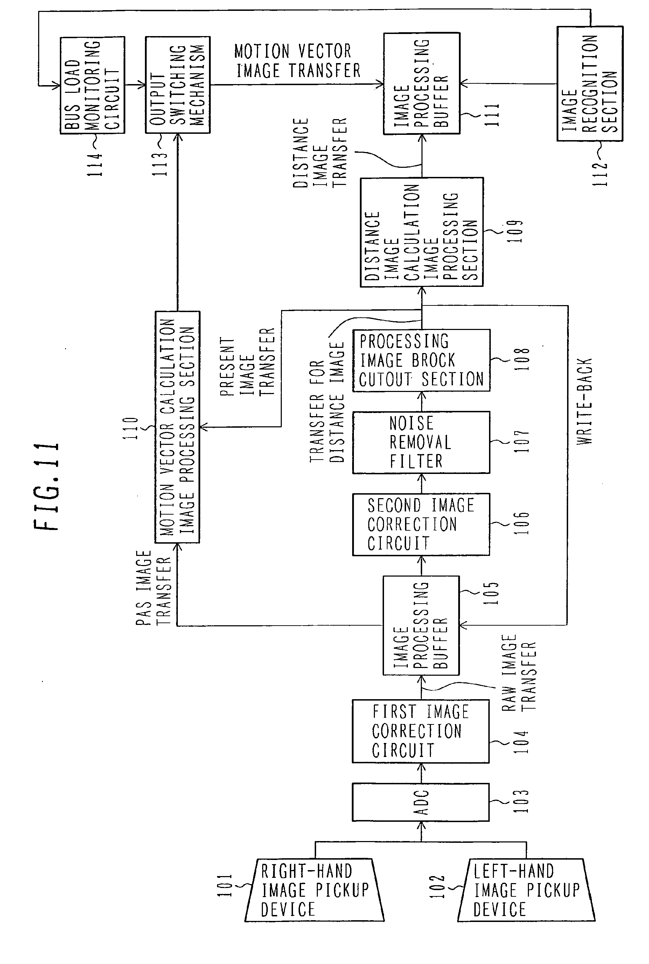

Fig. 11 is a block diagram illustrating the configuration of an image processing apparatus according to a fifth embodiment. The fifth embodiment is the same as the first embodiment except as otherwise described below.

The circuitry shown in Fig. 11 is obtained when the input to the disparity image write-back/motion vector calculation circuit is removed from the circuitry shown in Fig. 1. The fourth embodiment involves an increased amount of calculation because it does not skip the processes that are indicated in steps 301 and 303. Further, since the fifth embodiment cannot evaluate reliability through the use of disparity images as indicated in step 308, it is inferior to the first embodiment in motion vector reliability. However, as disparity image calculations are completely independent of motion vector calculations, the fifth embodiment can perform motion vector calculations with an extremely high precision without including, for instance, an error in disparity image calculations. Furthermore, the motion vector images are of the same block size as the disparity images. Therefore, the circuitry employed by the fifth embodiment maintains high reliability by collating the disparity images obtained after motion vector image calculation indicated in step 315. In addition, the fifth embodiment does not perform a past disparity image transfer as indicated in step 405 or a disparity image transfer as indicated in step 409. Therefore, transfer loads are reduced so as to decrease the loads imposed on the system as a whole according to the fifth embodiment.

### Sixth Embodiment

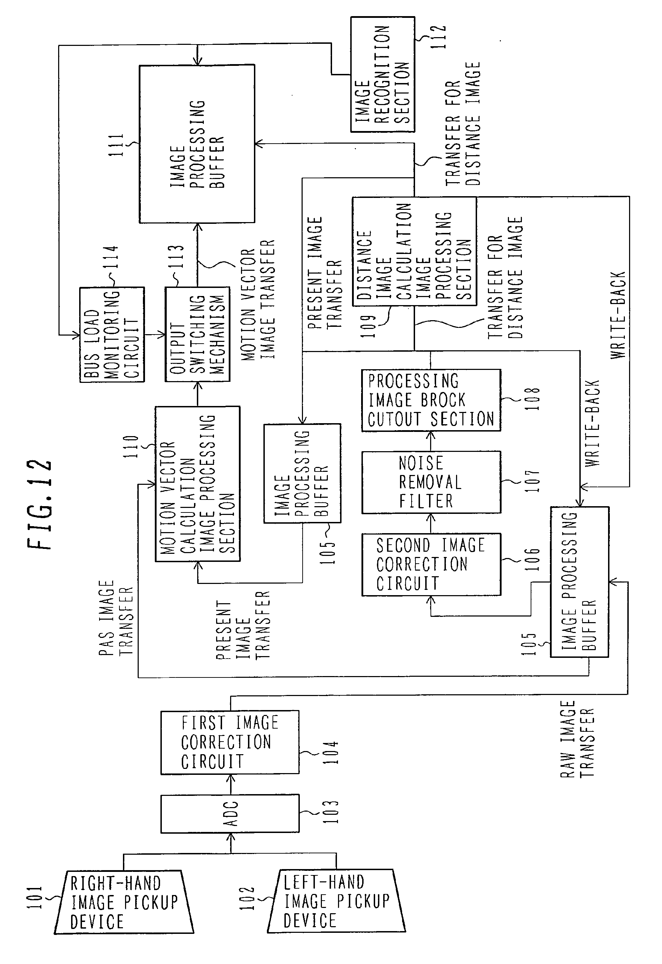

Fig. 12 is a block diagram illustrating the configuration of an image processing apparatus according to a sixth embodiment. The sixth embodiment is the same as the first embodiment except as otherwise described below.

The circuitry shown in Fig. 12 is obtained when a past image storage buffer RAM 150 is added to the circuitry shown in Fig. 1. Even if the circuit configuration is changed, for instance, by altering circuit conditions or disparity image/motion vector image calculation logic as mentioned above, the system according to the sixth embodiment can implement the proposed functions as a system as far as it includes the past image storage buffer.

### Seventh Embodiment

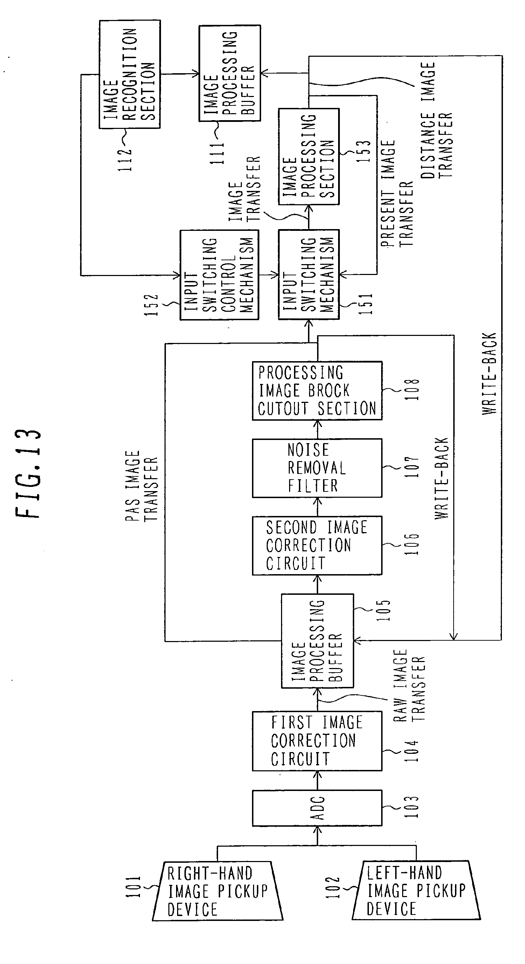

Fig. 13 is a block diagram illustrating the configuration of an image processing apparatus according to a seventh embodiment. The seventh embodiment is the same as the first embodiment except as otherwise described below.

The circuitry shown in Fig. 13 is obtained when the distance image calculation image processing section 109 and motion vector calculation image processing section 110 are integrated as an image processing section 153. An input switching mechanism 151 and an input switching control mechanism 152 are added for switching between disparity image generation input and motion vector image generation input. When present raw images obtained from a plurality of image pickup sections are input, a disparity image is generated. When past and present images are input as described in the first to sixth embodiments, a motion vector image is generated. Since the system according to the seventh embodiment has uniquely determined outputs, it does not require the output switching mechanism 113 or bus load monitoring circuit 114. As described above, the proposed functions can be implemented in spite of the integration when the degree-of-image-agreement judgment circuit has an adequate processing capacity and uses SAD calculation results capitalizing on the fact that no difference is encountered in the disparity and motion vector images, in terms of degree-of-image-agreement judgment.

## Claims

1. An image processing apparatus comprising:
an image processing buffer (105) for storing images that are input from a plurality of image pickup devices (101, 102);
a first image processing section (109) for acquiring a disparity image between a first image, which is picked up by an image pickup device and stored in the image processing buffer, and a second image, which is simultaneously picked up by another image pickup device that corresponds to the image pickup device used to pick up the first image; and
a second image processing section (110) for acquiring a motion vector image between the first image and a third image, which is picked up with a time lag by the image pickup device used to pick up the first image.

2. The image processing apparatus according to claim 1, further comprising:
an image recognition section (112) for inputting the disparity image acquired by the first image processing section and the motion vector image acquired by the second image processing section and recognizing a picked-up target object within the images in accordance with the disparity image and the motion vector image.

3. The image processing apparatus according to claim 2, wherein the image recognition section recognizes a picked-up target object within the images in accordance with the disparity image, the motion vector image, and a raw image stored in the image processing buffer.

4. The image processing apparatus according to claim 1, further comprising:
a first image correction section (104) for absorbing a brightness value difference between images input from the image pickup devices.

5. The image processing apparatus according to claim 1, wherein the images to be input into the first image processing section and the second image processing section are input through at least either a second image correction section (106), which corrects an image distorted by a camera lens, or an image noise removal section (107), which removes image noise.

6. The image processing apparatus according to claim 1, further comprising:
a processing image block cutout section for cutting an image block out of an image as a processing unit,
wherein the image derived from the processing image block cutout section is input into the first image processing section and the second image processing section and written back into the image processing buffer; and
wherein the written-back image is input into the second image processing section as the third image.

7. The image processing apparatus according to claim 1, further comprising:
an output switching section (113) for exercising control to specify whether or not to permit the second image processing section to output the motion vector image.

8. The image processing apparatus according to claim 1, wherein the first image processing section and the second image processing section have the same processing target image range.

9. The image processing apparatus according to claim 1, further comprising:
a processing image block cutout section for cutting an image block out of an image as a processing unit,
wherein, when a disparity more than a predefined value is not found in the image block, which is cut out by the processing image block cutout section, the second image processing section skips a process of calculating the motion vector image concerning the image block.

10. The image processing apparatus according to claim 1, further comprising:
a processing image block cutout section for cutting an image block out of an image as a processing unit,
wherein the second image processing section determines the degree of reliability indicating the possibility of each image block of the third image being motion vector calculation targets of a predetermined image block of the first image, and determines the motion vector image while regarding an image block having the highest degree of reliability as the motion vector calculation target.

11. The image processing apparatus according to claim 10, wherein the second image processing section uses the disparity image to determine the degree of reliability.

12. The image processing apparatus according to claim 2, wherein the image recognition section groups motion vectors of the motion vector image; and wherein, when a particular motion vector differs from surrounding motion vectors in magnitude or direction, the image recognition section uses the disparity image to judge whether the particular motion vector and the surrounding motion vectors are motion vectors of different objects.

13. An image processing method comprising the steps of:
storing images that are input from a plurality of image pickup devices;
acquiring a disparity image between a first image, which is picked up by an image pickup device and stored, and a second image, which is simultaneously picked up by another image pickup device that corresponds to the image pickup device used to pick up the first image;
acquiring a motion vector image between the first image and a third image, which is picked up with a time lag by the image pickup device used to pick up the first image; and
inputting the disparity image and the motion vector image and recognizing a picked-up target object within the images in accordance with the disparity image and the motion vector image.
